# EUROPEAN PATENT SPECIFICATION

(11) **EP 2 681 078 B1**
(45) Date of publication and mention of the grant of the patent: **09.03.2016**
(21) Application number: 11813360.2
(22) Date of filing: 21.12.2011
(51) Int. Cl.: B60R 1/00, H04N 5/262, H04N 7/18

(54) **IMAGE PROVIDING DEVICE**
BILDBEREITSTELLUNGSVORRICHTUNG
DISPOSITIF PRODUISANT DES IMAGES

(30) Priority: 27.12.2010 JP 2010290842
(43) Date of publication of application: 08.01.2014
(73) Proprietor: Toyota Jidosha Kabushiki Kaisha, Toyota-shi, Aichi-ken 471-8571 (JP)
(72) Inventor: HIEI, Yu, Toyota-shi Aichi-ken 471-8571 (JP); OKAMURA, Ryuji, Toyota-shi Aichi-ken 471-8571 (JP)
(74) Representative: TBK
(86) International application number: PCT/IB2011/003099
(87) International publication number: WO 2012/090045

(56) References cited:
- EP-A1- 1 383 331
- EP-A2- 0 810 776
- US-A1- 2007 153 086
- US-A1- 2007 285 282

## Description

### BACKGROUND OF THE INVENTION

### 1. Field of the Invention

The invention relates to an image providing device that provides an image of vehicle surroundings to a driver.

### 2. Description of Related Art

An electronic mirror system including image pickup devices for picking up images behind a vehicle and on the sides of the vehicle and a display device that display the images picked up by the image pickup devices to a driver is described in Japanese Patent Application Publication No. 2009-83618 (JP-A-2009-83618). With such an electronic mirror system, the driver can recognize the state behind or on the sides of the vehicle, without using side mirrors.

However, in the aforementioned electronic mirror system, it may be difficult for the driver to view the images when either of the left and right image pickup devices gets into shadow of a building, a significant difference in brightness or luminance is created between the left and right images.

Document US 2007/285282 A1, which shows the preamble of claim 1, discloses a mobile camera system that connects plural camera apparatuses including at least first and second camera apparatuses mounted on a mobile body to one another and combines images photographed by the first and the second camera apparatuses, wherein reference data obtained by the first camera apparatus is transferred to the second camera apparatus via a camera control unit, signal processing is performed in the second camera apparatus on the basis of the reference data transferred to generate a corrected image, and an image from the first camera apparatus and the corrected image outputted from the second camera apparatus are combined to output a combined image.

### SUMMARY OF THE INVENTION

The invention provides an image providing device that can improve visibility of images.

According to an aspect of the present invention, there is provided an image providing device as defined in claim 1. Further aspects and features of the invention are defined in the dependent claims.

The image providing device according to the first aspect of the invention is installed in a vehicle and provides an image of surroundings of the vehicle to a driver. The image providing device includes a first image pickup unit having a first image pickup range positioned in the vehicle surroundings; a second image pickup unit having a second image pickup range that does not overlap the first image pickup range in the vehicle surroundings; a first image providing unit that provides to the driver a first image that is an image picked up by the first image pickup unit; a second image providing unit that is provided separately from the first image providing unit and provides to the driver a second image that is an image picked up by the second image pickup unit; an image display parameter correction unit that corrects a second image display parameter of the second image provided by the second image providing unit, according to a first image display parameter of the first image provided by the first image providing unit, and an attention object determination unit that determines whether or not an attention object to which the driver is to pay attention is present in the first image or the second image, wherein the image display parameter correction unit performs correction that emphasizes the image, from the first image and the second image, that is determined by the attention object determination unit to include the attention object.

According to the abovementioned aspect, even when a large difference in image display parameter such as brightness or luminance occurs between the first image and the second image, for example, when either of the first and second image pickup units gets into shadow, the difference in image display parameter can be reduced and therefore visibility of the images to the driver can be improved by correcting the second image display parameter according to the first image display parameter.

With such a configuration, when an attention object to which the driver is to pay attention is present in the image, the driver's attention can be naturally attracted to this image by performing correction that emphasizes this image, for example, by increasing the luminance, and the driver will become aware of the presence of the attention object. In addition, the emphasis is made using the image display parameters, and therefore the driver does not feel disturbed.

In the abovementioned aspects, the first image pickup unit may be a right side camera that is provided on a front right side of the vehicle and picks up, as the first image, an image on a right rear side of the vehicle, and the second image pickup unit may be a left side camera that is provided on a front left side of the vehicle and picks up, as the second image, an image on a left rear side of the vehicle.

With such a configuration, the correction can be performed so as to decrease the difference in image display parameter between the images picked up with the right side camera and left side camera of the vehicle. Therefore, visibility of the image of the left rear side and right rear side of the vehicle that are the blind zones for the driver can be improved.

In the abovementioned aspects, the first image providing unit and the second image providing unit may be disposed side by side inside the vehicle.

With such a configuration, since visibility is greatly influenced by the difference in image display parameter, the improvement in image visibility can be defined more clearly.

In the abovementioned aspects, the image display parameter correction unit may correct both the first image display parameter and the second image display parameter.

With such a configuration, the image display parameters of both images are corrected so as to reduce the difference in image display parameter. Therefore, the variation amount of image display parameter in each image can be reduced and the image display parameters can be corrected without creating a feel of discomfort for the driver.

In the abovementioned aspects, an environment state detection unit that detects an environment state around the vehicle may be further provided. The environment state detection unit may correct the image display parameter on the basis of a detection result of the environment state detection unit.

With such a configuration, since the correction of image display parameter is performed on the basis of environment state such as daytime and nighttime, where it is daytime, the correction can be performed with reference to a brighter image correspondingly to a state in which the image abruptly becomes dark, for example, because the image pickup unit gets into shadow, and where it is nighttime, the correction can be performed with reference to a darker image correspondingly to a state in which the image abruptly becomes bright, for example, due to illumination with headlights of the trailing vehicle. Therefore, with such an image providing device, visibility can be further improved by performing adequate correction corresponding to the environment state.

The invention makes it possible to improve visibility of images.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram illustrating an embodiment of the image providing device according to the invention;
FIG. 2 is a plan view illustrating the case where only the pickup range of the right side camera got into shadow of a wall;
FIG. 3A shows a display prior to image display parameter correction performed in the case illustrated by FIG. 2; FIG. 3B shows a display after the image display parameter correction performed in the case illustrated by FIG. 2;
FIG. 4 serves to explain the sampling range in comparison of image display parameters;
FIG. 5 is a plan view illustrating the stage before or after the vehicle is parked;
FIG. 6 is a plan view illustrating the case in which an attention object is included in the image pickup range;
FIG. 7A shows a display prior to image display parameter correction performed in the case illustrated by FIG. 6; FIG. 7B shows a display after the image display parameter correction performed in the case illustrated by FIG. 6; and
FIG. 8 is a flowchart illustrating the operation of the image providing device.

### DETAILED DESCRIPTION OF EMBODIMENTS

The preferred embodiments of the invention will be explained below in greater detail with reference to the appended drawings.

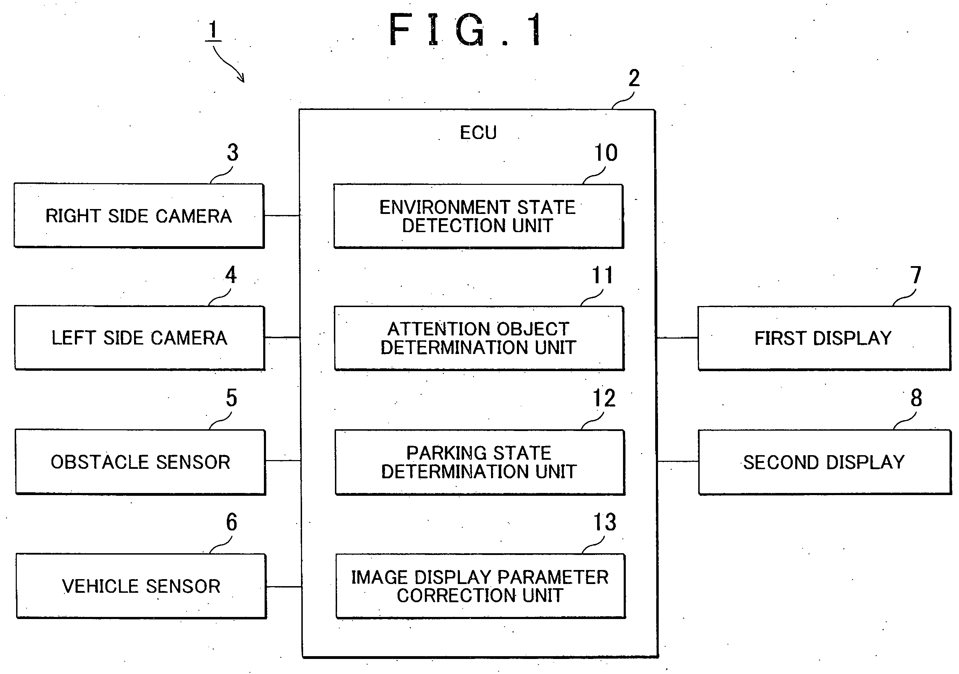

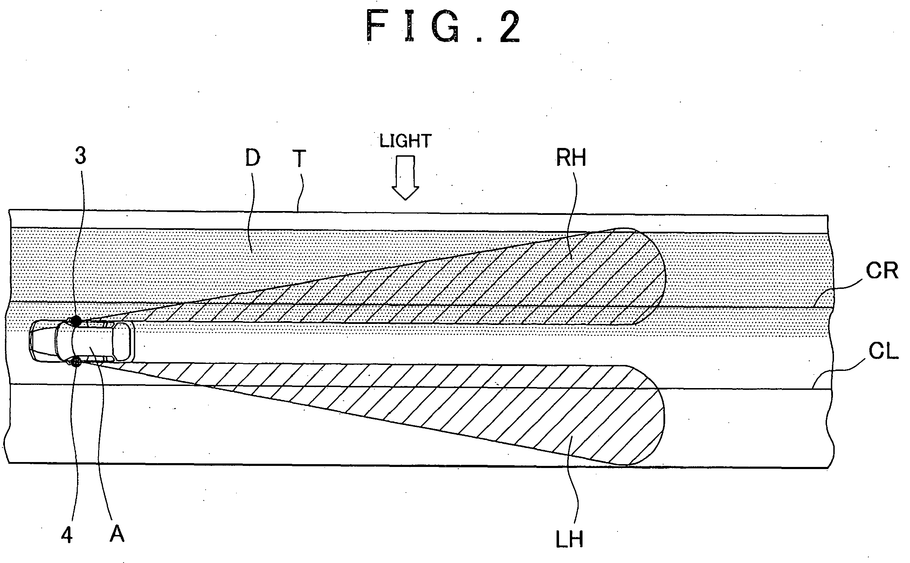

As shown in FIGS. 1 and 2, an image providing device 1 according to the present embodiment is provided in a vehicle A and provides images of the surroundings of the vehicle A to the driver. The image providing device 1 realizes the improvement in image visibility by performing correction so as to reduce the difference in image display parameter such as brightness or luminance of a plurality of images provided to the driver.

The image providing unit 1 is provided with an Electronic Control Unit (ECU) 2 that controls the entire device 1. The ECU 2 is an electronic control unit constituted by a Central Processing Unit (CPU), a Read Only Memory (ROM), and a Random Access Memory (RAM). In the ECU 2, the application programs stored in the ROM are loaded into the RAM and executed by the CPU, thereby executing operational processing of various types relating to the process of providing images.

The ECU 2 is connected to a right side camera 3, a left side camera 4, an obstacle sensor 5, a vehicle sensor 6, a first display 7, and a second display 8.

The right side camera 3 is provided at a position of the right side mirror of the vehicle A. The right side camera 3 has an image pickup range RH extending rearward to the right of the vehicle A. The right side camera 3 picks up a right rear image that is an image within the image pickup range RH. The right side camera 3 transmits the picked-up right rear image to the ECU 2. The right side camera 3 functions as the first image pickup unit. The image pickup range RH is considered to be the first image pickup range, and the right rear image is considered to be the first image.

Likewise, the left side camera 4 is provided at a position of the left side mirror of the vehicle A. The left side camera 4 has an image pickup range LH extending rearward to the left of the vehicle A. The left side camera 4 picks up a left rear image that is an image within the image pickup range LH. The left side camera 4 transmits the picked-up left rear image to the ECU 2. The left side camera 4 functions as the second image pickup unit. The image pickup range LH is considered to be the second image pickup range, and the left rear image is considered to be the second image.

The obstacle sensor 5 detects an obstacle such as a pedestrian, another vehicle, or a building present around the vehicle A. The obstacle sensor 5 is constituted by a plurality of sensors such as laser radar sensors and image sensors. The obstacle sensor 5 transmits the obstacle detection results as obstacle information to the ECU 2.

The vehicle sensor 6 is constituted by a speed sensor, a brake sensor, a shift sensor, a steering sensor, an accelerator operation amount sensor, a headlight sensor, a wiper sensor, and the like. The vehicle sensor 6 detects the running state of the vehicle A by these sensors. In addition to the steering state and speed state of the vehicle A, the running state includes the shift state of the vehicle, the on/off state of the headlights, and the wiper drive/stop state. The vehicle sensor 6 transmits the detected running state of the vehicle A as running state information to the ECU 2.

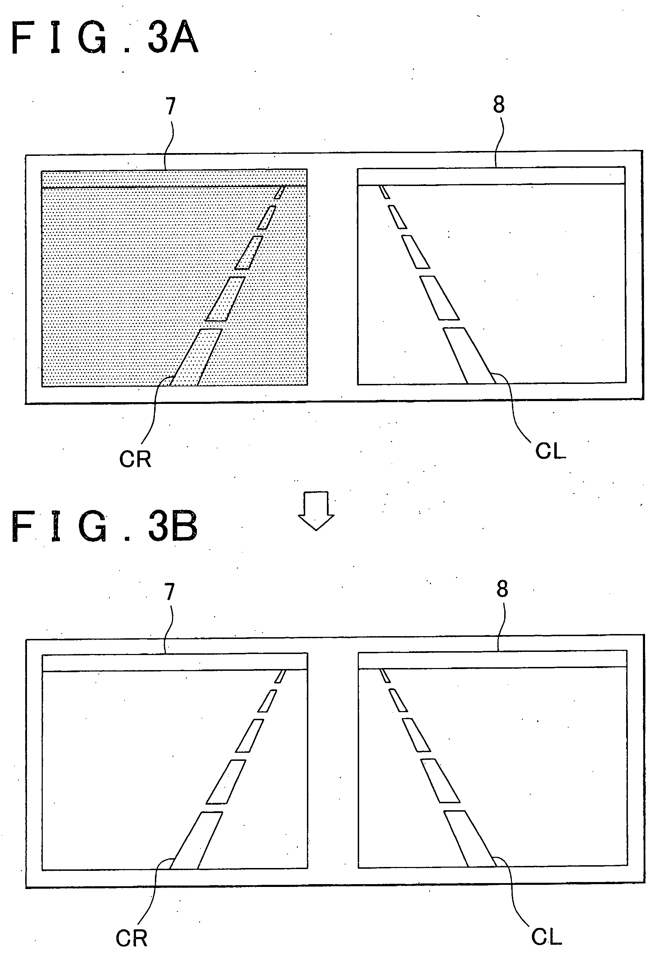

The first display 7 and the second display 8 are small displays provided, for example, side by side on the instrument panel of the vehicle A (see FIGS. 3A and 3B). The first display 7 displays and provides to the driver the right rear image picked up by the right side camera 3. The second display 8 displays and provides to the driver the left rear image picked up by the left side camera 4. Since the first display 7 and the second display 8 are provided side by side, the driver can simultaneously recognize the state of the right rear side and left rear side of the vehicle. The first display 7 functions as the first image providing unit. The second display 8 functions as the second image providing unit.

The ECU 2 has an environment state detection unit 10, an attention object determination unit 11, a parking state determination unit 12, and a image display parameter correction unit 13.

The environment state detection unit 10 detects the environment state around the vehicle A on the basis of obstacle information obtained with the obstacle sensor 5 and running state information obtained with the vehicle sensor 6. The environment state includes an arrangement state of an obstacle such as a building or a large vehicle, a daytime or nighttime state, and a weather state.

More specifically, the environment state detection unit 10 detects, the arrangement state of an obstacle from the obstacle information obtained with the obstacle sensor 5. Further, the environment state detection unit 10 detects the daytime and nighttime state from the on/off state of the headlights and detects the weather state form the wiper drive/stop state, from among the running state information obtained with the vehicle sensor 6.

A method for detecting the environment state is not limited to the above-described method. For example, the environment state detection unit 10 may detect the present location of the vehicle A with a Global Positioning System (GPS) of the navigation system and then detect the arrangement state of buildings around the vehicle A from the map database. Further, the environment state detection unit 10 may detect the weather state including the position of sun by using weather information acquired by wireless communication.

The attention object determination unit 11 determines an attention object to which the driver is to pay attention in the surroundings of the vehicle A on the basis of obstacle information obtained with the obstacle sensor 5. The attention object to which the driver is to pay attention, for example, corresponds to a pedestrian or another vehicle.

The parking state determination unit 12 determines whether or not the vehicle A is in the state before or after parking on the basis of the running state information obtained with the vehicle sensor 6. The state before or after parking is a state in which the vehicle A is to be parked or a state in which the vehicle is started from the parked state.

More specifically, the parking state determination unit 12 determines whether or not the vehicle A is in the state before or after parking on the basis of the vehicle speed state, vehicle steering state, and vehicle shift state, from among the vehicle state information obtained with the vehicle sensor 6. For example, the parking state determination unit 12 determines that the vehicle A is in the state before or after parking when the vehicle is in the low-speed state or the steering angle is large or when the vehicle is in the reverse shift state.

The image display parameter correction unit 13 compares the image display parameter of the right rear image displayed by the first display 7 with the image display parameter of the left rear image displayed by the second display 8.

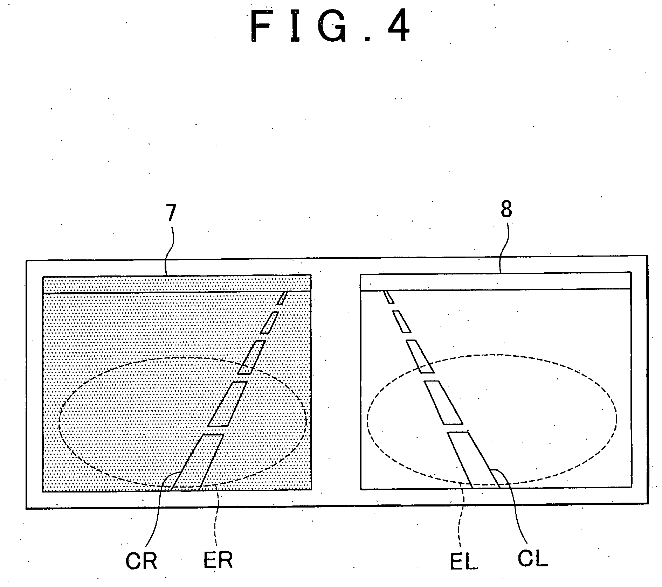

More specifically, the image display parameter correction unit 13 recognizes and compares the image display parameters in sampling ranges ER, EL shown in FIG. 4. Since image display parameters are changed significantly by the effect of another vehicle displayed in the image within a range in which the other vehicle is seen, the ranges in which the road surface is mainly seen are selected as the sampling ranges ER, EL. Furthermore, in order to suppress more effectively the effect of the display of other vehicles and the like, the image display parameter correction unit 13 recognizes the image display parameters of the sampling ranges ER, EL by an appropriate method.

For example, the image display parameter correction unit 13 calculates a time average of image display parameters in the sampling ranges ER, EL and recognizes the image display parameters as the calculation results. Further, the image display parameter correction unit 13 may recognize the image display parameters within a range from which another vehicle detected by optical flow is excluded. The image display parameter correction unit 13 may also perform recognition of image display parameters from the road surface extracted by clustering. The image display parameter correction unit 13 may also perform the recognition of image display parameters by a combination of a plurality of methods.

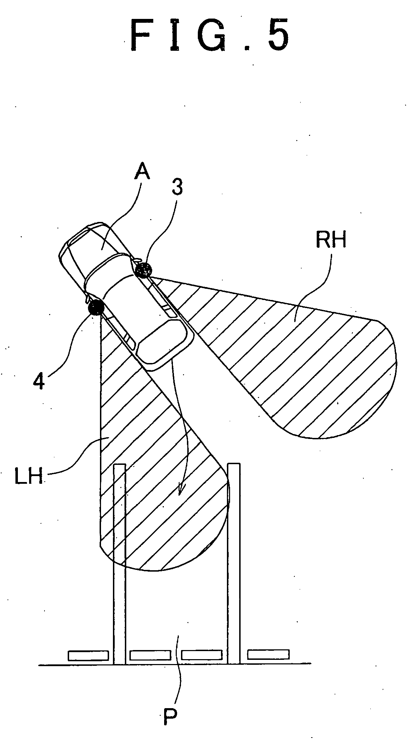

In the case where the vehicle is before or after parking in a parking space P, it is highly probable that the type of road surface (gravel, asphalt, concrete, bricks, etc) viewed by the right side camera 3 and left side camera 4 will be different as shown in FIG. 5, therefore the image display parameter correction unit 13 changes the sampling range and the like to a mode different from the usual mode. For example, where the image display parameter correction unit 13 stores each brightness or luminance of the same lightness in the journey to the parking space, changes in the circumstances are recognized regardless of the type of road surface, and erroneous recognition of image display parameters is avoided.

The image display parameter correction unit 13 corrects the image display parameter of the right rear image or the image display parameter of the left rear image on the basis of comparison results of the image display parameter of the right rear image and the image display parameter of the left rear image.

The correction of image display parameters performed by the image display parameter correction unit 13 will be explained below with reference to FIGS. 2, 3A, and 3B. FIG 2 shows the case where the image pickup range RH of the right side camera 3, from among the right side camera 3 and the left side camera 4, gets into a shadow D of a wall T. FIG. 3A shows the first display 7 and the second display 8 before the image display parameter correction in the case illustrated by FIG. 2. FIG. 3B shows the first display 7 and the second display 8 after the image display parameter correction in the case illustrated by FIG 2. Lane boundary lines CR, CL of the lane in which the vehicle A travels are shown in FIGS. 2 and 3.

In the case shown in FIG. 2, the image display parameter correction unit 13 recognizes the difference in luminance caused by the shadow by comparing the image display parameter of the right rear image provided by the first display 7 and the image display parameter of the left rear image provided by the second display 8 shown in FIG. 3A. Then, as shown in FIG. 3B, the image display parameter correction unit 13 performs the correction by reducing the difference in luminance by increasing the luminance of the right rear image.

The image display parameter correction unit 13 also corrects the image display parameter correspondingly to conditions on the basis of running state information obtained by the vehicle sensor 6, environmental conditions detected by the environment state detection unit 10, determination results obtained by the attention object determination unit 11, and determination results obtained by the parking state determination unit 12.

More specifically, when the image display parameter correction unit 13 recognizes that it is daytime from the environmental conditions detected by the environment state detection unit 10, a difference in brightness or luminance often occurs when the image pickup ranges RH, LH of cameras 3, 4 get into shadow of a building or the host vehicle. Therefore, the image with a lower luminance is corrected to have a luminance identical to the luminance of the image with a higher luminance. In this case, the image display parameter correction unit 13. specifies the presence of an obstacle creating the shadow on the basis of arrangement conditions of the obstacle or weather conditions, from among the environmental conditions. As a result, the image display parameter correction unit 13 can distinguish between the case where the luminance is reduced by the shadow and the case where image pickup object merely has a dark color, and erroneous recognition can be avoided.

Further, when the image display parameter correction unit 13 recognizes that it is nighttime from the environmental conditions detected by the environment state detection unit 10, the difference in brightness or luminance is often caused by the light from headlights of the trailing vehicle. Therefore, the image with a high luminance is corrected to have a luminance identical to the luminance of the image with a lower luminance. Further, where a limit threshold is set for the luminance in the image display parameter correction unit 13, bright light such as that of headlights is prevented from being directly displayed in the image.

Further, when the parking state determination unit 12 determines that the vehicle A is in the state before or after parking, it is necessary that the image display parameter correction unit 13 accurately recognize obstacles such as surrounding walls and other vehicles. Therefore, the image with a lower luminance is corrected to have a luminance identical to the luminance of the image with a higher luminance.

The image display parameter correction unit 13 determines whether or not an attention object is included in the right rear image or left rear image on the basis of the right rear image picked up by the right side camera 3, left rear image picked up by the left side camera 4, and determination results obtained by the attention object determination unit 11.

When the image display parameter correction unit 13 determines that the attention object is included in the right rear image or left rear image, the correction that emphasizes this image is performed. The emphasizing correction as referred to herein is, for example, correction that increases brightness or luminance of the image including the attention object. Further, the emphasizing correction also includes the case where the image including the attention object is relatively emphasized by decreasing the brightness or luminance of the image that does not include the attention object.

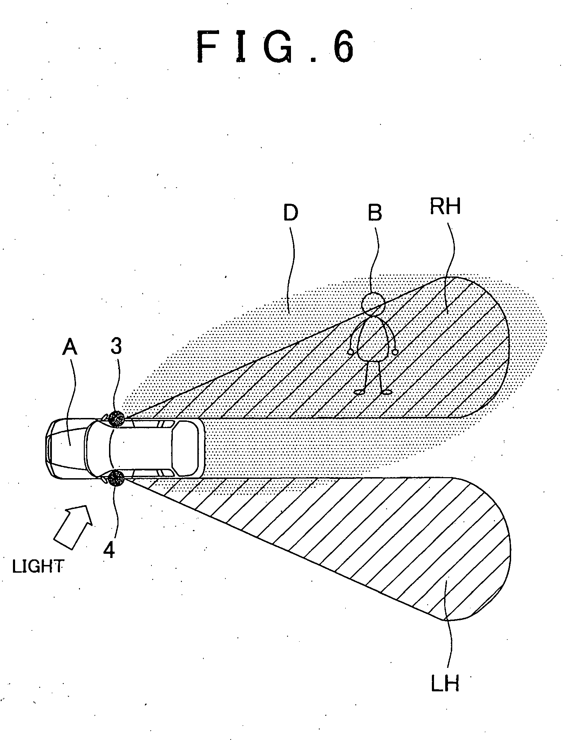

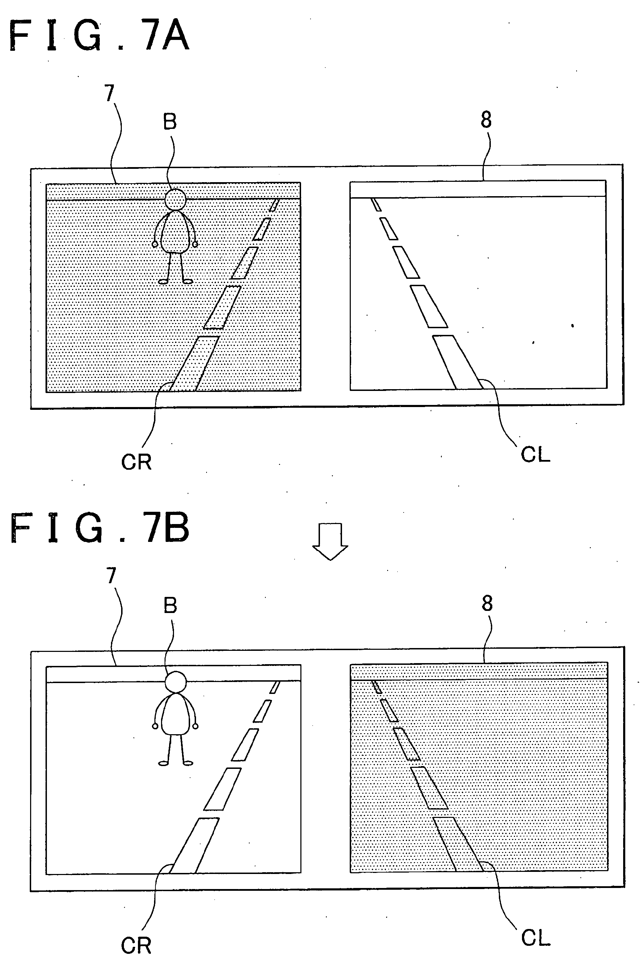

FIG. 6 is a plan view illustrating the case in which a pedestrian B, which is an attention object, is included in the right rear image picked up by the right side camera 3. FIG. 7B shows the first display 7 and the second display 8 before the image display parameter correction illustrated by FIG. 6. FIG. 7B shows the first display 7 and the second display 8 after the image display parameter correction illustrated by FIG. 6.

In the case shown in FIG. 6, the image display parameter correction unit 13 determines that the pedestrian B is included in the right rear image picked up by the right side camera 3 on the basis of the right rear image picked up by the right side camera 3 shown in FIG. 7A, left rear image picked up by the left side camera 4, and determination results of the attention object determination unit 11. As shown in FIG. 7B, the image display parameter correction unit 13 performs the correction emphasizing the image by increasing the luminance with respect to the image display parameter of the right rear image that includes the pedestrian B. The image display parameter correction unit 13 also performs the correction that relatively emphasizes the right rear image by reducing the luminance of the left rear image that does not include the attention object.

The operation of the above-described image providing device 1 will be described below. The correction of luminance will be explained by way of example as the correction of image display parameter.

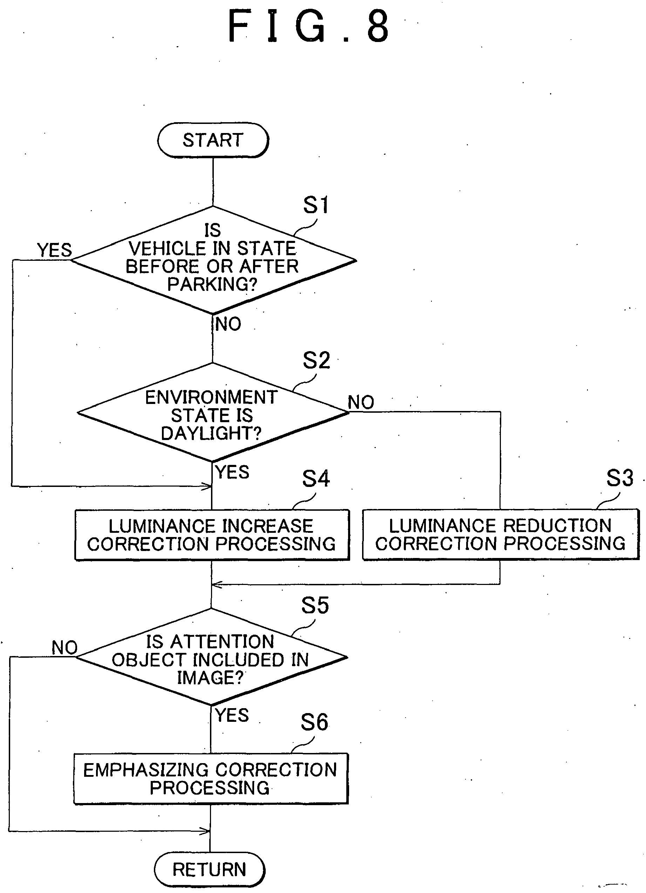

As shown in FIG. 8, in the image providing device 1, first, the parking state determination unit 12 determines whether the vehicle A is in the state before or after parking (S1). The parking state determination unit 12 determines whether the vehicle A is in the state before or after parking, for example, on the basis of vehicle speed state and vehicle steering state, from the running state information obtained by the vehicle sensor 6. When the parking state determination unit 12 determines that the vehicle A is in the state before or after parking, the processing advances to step S4.

When the parking state determination unit 12 determines that the vehicle A is not in the state before or after parking, the image display parameter correction unit 13 determines whether or not the environment state is daylight on the basis of the environment state around the vehicle that has been detected by the environment state detection unit 10 (S2). Where the image display parameter correction unit 13 has determined that the environment state is daylight, the processing advances to step S4.

Where the image display parameter correction unit 13 has determined that the environment state is not daylight, it is determined that the environment state is nighttime, and the image display parameter correction unit performs a luminance reducing correction processing of correcting the image with a lower luminance to have a luminance identical to the luminance of the image with a higher luminance, from among the right rear image picked up by the right side camera 3 and the left rear image picked up by the left side camera 4 (S3). The processing then advances to step S5.

In step S4, the image display parameter correction unit 13 performs a luminance increasing correction processing of correcting the image with a higher luminance to have a luminance identical to the luminance of the image with a lower luminance from among the right rear image picked up by the right side camera 3 and the left rear image picked up by the left side camera 4. The processing then advances to step S5. The image display parameter correction unit 13 may also perform correction only in the case in which the difference in luminance between the right rear image and the left rear image is equal to or higher than a predetermined value.

In step S5, the image display parameter correction unit 13 determines whether or not an attention object is included in the right rear image or left rear image on the basis of the right rear image obtained with the right side camera 3, left rear image obtained with the left side camera 4, and determination results of the attention object determination unit 11. When the image display parameter correction unit 13 determines that the attention object is not included in either of the images, the processing returns to step S1 and the operations are repeated.

Where the image display parameter correction unit 13 determines that the attention object is included in either of the images, the emphasizing correction process that emphasizes the image including the attention object is performed (S6). In the emphasizing correction processing, the image display parameter correction unit 13 performs the correction that increases brightness or luminance of the image including the attention object. The image display parameter correction unit 13 also performs the correction that relatively emphasizes the image including the attention object by decreasing the brightness or luminance of the image that does not include the attention object. The processing then returns to step S1 and the operations are repeated.

With the image providing device 1 according to the present embodiment that has been explained hereinabove, even when a large difference in an image display parameter, such as brightness or luminance, occurs between the right rear image and left rear image, for example in the case where either of the right side camera 3 and the left side camera 4 gets into shadow, the image display parameter of one image can be corrected so as to decrease the difference in image display parameter on the basis of results obtained in comparing the right rear image with the left rear image. Therefore, visibility of images on the left rear side and right rear side of the vehicle that are the blind zones for the driver can be improved.

Further, in the image providing device 1, the first display 7 and the second display 8 are arranged side by side. Therefore, the driver can simultaneously recognize the left rear side and right rear side of the vehicle. Further, in this state, since visibility is greatly influenced by the difference in image display parameter, the improvement in image visibility by the image providing device 1 can be defined more clearly.

Further, with the image providing device 1, since the correction of image display parameter is performed on the basis of environment state such as daytime and nighttime, where it is daytime, the correction can be performed with reference to a brighter image correspondingly to a state in which the image abruptly becomes dark, for example, because the image pickup unit gets into shadow, and where it is nighttime, the correction can be performed with reference to a darker image correspondingly to a state in which the image abruptly becomes bright, for example, due to illumination with headlights of the trailing vehicle. Therefore, with the image providing device 1, visibility can be further improved by performing adequate correction corresponding to the environment state.

Further, with the image providing device 1, when an attention object to which the driver is to pay attention is present in the image, the driver's attention can be naturally attracted to this image by performing correction that emphasizes this image, for example, by increasing the luminance, and the driver will become aware of the presence of the attention object. In addition, the emphasis is made using the image display parameters, and therefore the driver does not feel disturbed.

The invention is not limited to the above-described embodiments.

For example, the image display parameter correction unit 13 may also correct the image display parameter of another image with respect to the image display parameter of one image, from among the right rear image displayed by the first display 7 and the left rear image displayed by the second display 8. In this case, when a large difference in image display parameter such as brightness and luminance occurs between the right rear image and left rear image, the difference in image display parameter can be reduced by correcting the image display parameter of the left rear image according to the image display parameter of the right rear image, and visibility of the image to the driver can be improved. It is also possible to correct the image display parameter of the right rear image according to the image display parameter of the left rear image. The image serving as a reference for correction, from among the right rear image and left rear image, can be considered the first image and the image which is to be corrected can be considered the second image.

The image display parameter correction unit 13 may also correct both image display parameters, instead of matching the image display parameter of one image with the image display parameter of the other image, when correcting the image display parameter so as to decrease the difference in image display parameter between the right rear image arid left rear image. In this case, the variation amount of the image display parameter of each image can be reduced and the correction of image display parameter can be performed, without creating the feel of discomfort for the driver. Further, color shade and sharpness of the image may be also included in the image parameters and correction thereof may be performed.

The invention can be effectively applied not only to the right side camera 3 and left side camera 4, but also to a back camera that picks up images behind the vehicle. Further, the number of cameras and displays is not limited to two, and three or more cameras and displays can be also used.

The image providing device in accordance with the invention can also implement the correction of image display parameters of various kinds according to the circumstances. For example, since the cameras easily get into shadow when the vehicle is driven in a city street, it is possible to determine whether the vehicle is driven in a city street with a navigation system and change the correction method for image display parameters. Further, the images change significantly with time when the vehicle is driven at a high speed. Therefore, it is also possible to change the correction method for image display parameters on the basis of vehicle speed.

## Claims

1. An image providing device that is installed in a vehicle and provides an image of surroundings of the vehicle to a driver, comprising:
a first image pickup unit (3) having a first image pickup range positioned in the vehicle surroundings;
a second image pickup unit (4) having a second image pickup range that does not overlap the first image pickup range in the vehicle surroundings;
a first image providing unit (7) that provides to the driver a first image that is an image picked up by the first image pickup unit;
a second image providing unit (8) that is provided separately from the first image providing unit and provides to the driver a second image that is an image picked up by the second image pickup unit; and
an image display parameter correction unit (13) that corrects at least one of an image display parameter of the first image and an image display parameter of the second image on the basis of comparison results of the image display parameter of the first image and the image display parameter of the second image;
**characterized by**
an attention object determination unit (11) that determines whether or not an attention object to which the driver is to pay attention is present in the first image or the second image, wherein
the image display parameter correction unit (13) performs correction that emphasizes the image, from the first image and the second image, that is determined by the attention object determination unit (11) to include the attention object.

2. The image providing device according to claim 1, wherein the image display parameter correction unit (13) corrects the second image display parameter so as to become closer to the first image display parameter.

3. The image providing device according to claim 1, wherein the image display parameter correction unit (13) corrects the first image display parameter and the second image display parameter so that a difference between the first image display parameter and the second image display parameter is reduced.

4. The image providing device according to any one of claims 1 to 3, wherein the first image pickup unit (3) is a right side camera that is provided on a front right side of the vehicle and picks up, as the first image, an image on a right rear side of the vehicle, and the second image pickup unit (4) is a left side camera that is provided on a front left side of the vehicle and picks up, as the second image, an image on a left rear side of the vehicle.

5. The image providing device according to any one of claims 1 to 4, wherein the first image providing unit (7) and the second image providing unit (8) are configured to be disposed side by side inside the vehicle.

6. The image providing device according to any one of claims 1 to 5, wherein the image display parameter correction unit (13) corrects both the first image display parameter and the second image display parameter.

7. The image providing device according to any one of claims 1 to 6, further comprising an environment state detection unit 10 that detects an environment state around the vehicle, wherein the image display parameter correction unit (13) corrects the image display parameter on the basis of a detection result of the environment state detection unit (10).

8. The image providing device according to claim 7, further comprising a vehicle sensor (6) that detects a running state of the vehicle, wherein the environment state detection unit (10) detects the environment state around the vehicle on the basis of a detection result of the vehicle sensor (6).

9. The image providing device according to claim 7 or 8, further comprising an obstacle sensor (5) that detects an obstacle present around the vehicle, wherein the environment state detection unit (10) detects an arrangement state of the obstacle on the basis of obstacle information from the obstacle sensor (5).

10. The image providing device according to any one of claims 7 to 9, wherein the environment state detection unit (10) detects a daytime or nighttime state on the basis of the turn on/off state of headlights of the vehicle and detects a weather state by a wiper operation state in the vehicle.

11. The image providing device according to any one of claims 1 to 10, wherein in correction of the first image display parameter and the second image display parameter, the correction of at least one of image brightness, luminance, color shade and sharpness is performed.

12. The image providing device according to any one of claims 7 to 11, further comprising a parking state determination unit (12) that determines whether or not the vehicle is in a state before or after parking, wherein the parking state determination unit (12) determines whether the vehicle is in the state before or after parking on the basis of the running state detected by the vehicle sensor (6).

## Patentansprüche

1. Bildbereitstellungseinrichtung, die in einem Fahrzeug installiert ist und ein Bild einer Umgebung des Fahrzeugs an einen Fahrer bereitstellt, mit:
einer ersten Bildaufnahmeeinheit (3) mit einem ersten Bildaufnahmebereich, der in der Fahrzeugumgebung positioniert ist;
einer zweiten Bildaufnahmeeinheit (4) mit einem zweiten Bildaufnahmebereich, der sich mit dem ersten Bildaufnahmebereich in der Fahrzeugumgebung nicht überlappt;
einer ersten Bildbereitstellungseinheit (7), die dem Fahrer ein erstes Bild bereitstellt, das ein Bild ist, das durch die erste Bildaufnahmeeinheit aufgenommen wird;
einer zweiten Bildbereitstellungseinheit (8), die separat von der ersten Bildbereitstellungseinheit bereitgestellt ist und dem Fahrer ein zweites Bild bereitstellt, das ein Bild ist, das durch die zweite Bildaufnahmeeinheit aufgenommen wird; und
einer Bildanzeigeparameterkorrektureinheit (13), die zumindest einen eines Bildanzeigeparameters des ersten Bildes und eines Bildanzeigeparameters des zweiten Bildes basierend auf Vergleichsergebnissen des Bildanzeigeparameters des ersten Bildes und des Bildanzeigeparameter des zweiten Bildes korrigiert;
**gekennzeichnet durch**
eine Einheit (11) zur Bestimmung eines zu beachtenden Objekts, die bestimmt, ob ein zu beachtendes Objekt, das der Fahrer beachten soll, in dem ersten Bild oder dem zweiten Bild vorhanden ist oder nicht, wobei
die Bildanzeigeparameterkorrektureinheit (13) eine Korrektur durchführt, die von dem ersten Bild und dem zweiten Bild das Bild, von dem **durch** die Einheit (11) zur Bestimmung eines zu beachtenden Objekts bestimmt ist, dass es das zu beachtende Objekt enthält, hervorhebt.

2. Bildbereitstellungseinrichtung gemäß Anspruch 1, wobei die Bildanzeigeparameterkorrektureinheit (13) den zweiten Bildanzeigeparameter korrigiert, so dass dieser sich dem ersten Bildanzeigeparameter annähert.

3. Bildbereitstellungseinrichtung gemäß Anspruch 1, wobei die Bildanzeigeparameterkorrektureinheit (13) den ersten Bildanzeigeparameter und den zweiten Bildanzeigeparameter korrigiert, so dass eine Differenz zwischen dem ersten Bildanzeigeparameter und dem zweiten Bildanzeigeparameter reduziert wird.

4. Bildbereitstellungseinrichtung gemäß einem der Ansprüche 1 bis 3, wobei die erste Bildaufnahmeeinheit (3) eine Kamera auf der rechten Seite ist, die an einer rechten vorderen Seite des Fahrzeugs bereitgestellt ist, und als das erste Bild ein Bild auf einer rechten hinteren Seite des Fahrzeugs aufnimmt, und die zweite Bildaufnahmeeinheit (4) eine Kamera auf der linken Seite ist, die an einer vorderen linken Seite des Fahrzeugs bereitgestellt ist, und als das zweite Bild ein Bild einer linken hinteren Seite des Fahrzeugs aufnimmt.

5. Bildbereitstellungseinrichtung gemäß einem der Ansprüche 1 bis 4, wobei die erste Bildbereitstellungseinheit (7) und die zweite Bildbereitstellungseinheit (8) konfiguriert sind, um nebeneinander innerhalb des Fahrzeugs angeordnet zu sein.

6. Bildbereitstellungseinrichtung gemäß einem der Ansprüche 1 bis 5, wobei die Bildanzeigeparameterkorrektureinheit (13) sowohl den ersten Bildanzeigeparameter als auch den zweiten Bildanzeigeparameter korrigiert.

7. Bildbereitstellungseinrichtung gemäß einem der Ansprüche 1 bis 6, weiterhin mit einer Umgebungszustandserfassungseinheit (10), die einen Umgebungszustand um das Fahrzeug herum erfasst, wobei die Bildanzeigeparameterkorrektureinheit (13) den Bildanzeigeparameter basierend auf einem Erfassungsergebnis der Umgebungszustandserfassungseinheit (10) korrigiert.

8. Bildbereitstellungseinrichtung gemäß Anspruch 7, weiterhin mit einem Fahrzeugsensor (6), der einen Fahrzustand des Fahrzeugs erfasst, wobei die Umgebungszustandserfassungseinheit (10) den Umgebungszustand um das Fahrzeug herum basierend auf einem Erfassungsergebnis des Fahrzeugsensors (6) erfasst.

9. Bildbereitstellungseinrichtung gemäß Anspruch 7 oder 8, weiterhin mit einem Hindernissensor (5), der ein Hindernis erfasst, das um das Fahrzeug herum vorhanden ist, wobei die Umgebungszustandserfassungseinheit (10) einen Anordnungszustand des Hindernisses basierend auf Hindernisinformationen von dem Hindernissensor (5) erfasst.

10. Bildbereitstellungseinrichtung gemäß einem der Ansprüche 7 bis 9, wobei die Umgebungszustandserfassungseinheit (10) einen Tag oder eine Nacht basierend auf dem ein- oder ausgeschalteten Zustand von Scheinwerfern des Fahrzeugs erfasst und einen Wetterzustand durch einen Wischeroperationszustand in dem Fahrzeug erfasst.

11. Bildbereitstellungseinrichtung gemäß einem der Ansprüche 1 bis 10, wobei beim Korrigieren des ersten Bildanzeigeparameters und des zweiten Bildanzeigeparameters die Korrektur von zumindest einem einer Bildhelligkeit, einer Luminanz, eines Farbtons und einer Schärfe durchgeführt wird.

12. Bildbereitstellungseinrichtung gemäß einem der Ansprüche 7 bis 11, weiterhin mit einer Parkzustandsbestimmungseinheit (12), die bestimmt, ob sich das Fahrzeug in einem Zustand vor oder nach einem Parken befindet, wobei die Parkzustandsbestimmungseinheit (12) bestimmt, ob sich das Fahrzeug in einem Zustand vor oder nach einem Parken befindet, basierend auf dem Fahrzustand, der durch den Fahrzeugsensor (6) erfasst wird.

## Revendications

1. Dispositif de fourniture d'image qui est installé dans un véhicule et fournit une image des environs du véhicule à un conducteur, comprenant :
une première unité de capture d'image (3) ayant une première plage de capture d'image positionnée dans les environs du véhicule ;
une deuxième unité de capture d'image (4) ayant une deuxième plage de capture d'image qui ne chevauche pas la première plage de capture d'image dans les environs du véhicule ;
une première unité de fourniture d'image (7) qui fournit au conducteur une première image qui est une image capturée par la première unité de capture d'image ;
une deuxième unité de fourniture d'image (8) qui est prévue séparément de la première unité de fourniture d'image et fournit au conducteur une deuxième image qui est une image capturée par la deuxième unité de capture d'image ; et
une unité de correction de paramètres d'affichage d'image (13) qui corrige au moins l'un parmi un paramètre d'affichage d'image de la première image et un paramètre d'affichage d'image de la deuxième image sur la base de résultats de comparaison du paramètre d'affichage d'image de la première image et du paramètre d'affichage d'image de la deuxième image ;
**caractérisé par**
une unité de détermination d'objet d'attention (11) qui détermine si un objet d'attention auquel le conducteur doit prêter attention est présent ou non dans la première image ou dans la deuxième image, où
l'unité de correction de paramètres d'affichage d'image (13) effectue une correction qui met l'accent sur l'image, parmi la première image et la deuxième image, qui est déterminée, par l'unité de détermination d'objet d'attention (11), comme incluant l'objet d'attention.

2. Dispositif de fourniture d'image selon la revendication 1, dans lequel l'unité de correction de paramètres d'affichage d'image (13) corrige le deuxième paramètre d'affichage d'image de manière à se rapprocher du premier paramètre d'affichage d'image.

3. Dispositif de fourniture d'image selon la revendication 1, dans lequel l'unité de correction de paramètres d'affichage d'image (13) corrige le premier paramètre d'affichage d'image et le deuxième paramètre d'affichage d'image de sorte qu'une différence entre le premier paramètre d'affichage d'image et le deuxième paramètre d'affichage d'image soit réduite.

4. Dispositif de fourniture d'image selon l'une quelconque des revendications 1 à 3, dans lequel la première unité de capture d'image (3) est un appareil photo côté droit qui est prévu sur un côté avant droit du véhicule et capture, comme étant la première image, une image sur un côté arrière droit du véhicule, et la deuxième unité de capture d'image (4) est un appareil photo côté gauche qui est prévu sur un côté avant gauche du véhicule et capture, comme étant la deuxième image, une image sur un côté arrière gauche du véhicule.

5. Dispositif de fourniture d'image selon l'une quelconque des revendications 1 à 4, dans lequel la première unité de fourniture d'image (7) et la deuxième unité de fourniture d'image (8) sont configurées de manière à être disposées côte à côte à l'intérieur du véhicule.

6. Dispositif de fourniture d'image selon l'une quelconque des revendications 1 à 5, dans lequel l'unité de correction de paramètres d'affichage d'image (13) corrige à la fois le premier paramètre d'affichage d'image et le deuxième paramètre d'affichage d'image.

7. Dispositif de fourniture d'image selon l'une quelconque des revendications 1 à 6, comprenant en outre une unité de détection d'état d'environnement (10) qui détecte un état d'environnement autour du véhicule, dans lequel l'unité de correction de paramètres d'affichage d'image (13) corrige le paramètre d'affichage d'image sur la base d'un résultat de détection de l'unité de détection d'état d'environnement (10).

8. Dispositif de fourniture d'image selon la revendication 7, comprenant en outre un capteur de véhicule (6) que détecte un état de marche du véhicule, dans lequel l'unité de détection d'état d'environnement (10) détecte l'état d'environnement autour du véhicule sur la base d'un résultat de détection du capteur de véhicule (6).

9. Dispositif de fourniture d'image selon la revendication 7 ou 8, comprenant en outre un capteur d'obstacle (5) qui détecte un obstacle présent autour du véhicule, dans lequel l'unité de détection d'état d'environnement (10) détecte un état d'arrangement de l'obstacle sur la base d'informations d'obstacle provenant du capteur d'obstacle (5).

10. Dispositif de fourniture d'image selon l'une quelconque des revendications 7 à 9, dans lequel l'unité de détection de l'état d'environnement (10) détecte un état de jour ou de nuit sur la base de l'état allumé/éteint des phares du véhicule et détecte un état météorologique par un état de fonctionnement d'essuie-glace dans le véhicule.

11. Dispositif de fourniture d'image selon l'une quelconque des revendications 1 à 10, dans lequel lors de la correction du premier paramètre d'affichage d'image et du deuxième paramètre d'affichage d'image, la correction d'au moins l'une parmi la luminosité, la luminance, la nuance de couleur et la netteté de l'image est effectuée.

12. Dispositif de fourniture d'image selon l'une quelconque des revendications 7 à 11, comprenant en outre une unité de détermination d'état de stationnement (12) qui détermine si le véhicule est dans un état avant ou après stationnement ou non, dans lequel l'unité de détermination d'état de stationnement (12) détermine si le véhicule est dans l'état avant ou après stationnement sur la base de l'état de marche détecté par le capteur de véhicule (6).
